# EUROPÄISCHE PATENTSCHRIFT

(11) **EP 3 134 240 B1**
(45) Veröffentlichungstag und Bekanntmachung des Hinweises auf die Patenterteilung: **26.06.2019**
(21) Anmeldenummer: 15723427.9
(22) Anmeldetag: 17.04.2015
(51) Int. Cl.: B29B 9/06, B02C 18/22, B65H 51/10, F16C 13/00

(54) **FÜHRUNGSWALZE EINES EINZUGSWALZENPAARES EINER GRANULIERVORRICHTUNG ZUM GRANULIEREN VON KUNSTSTOFFSTRÄNGEN**
GUIDE ROLLER OF A PAIR OF FEED ROLLERS OF A GRANULATING DEVICE FOR GRANULATING STRANDS OF POLYMERIC MATERIAL
ROULEAU DE GUIDAGE D'UNE PAIRE DE ROULEAUX D'ALIMENTATION D'UN DISPOSITIF DE GRANULATION POUR LA GRANULATION DE RUBANS DE MATIÈRE POLYMÈRE

(30) Priorität: 22.04.2014 DE 202014003409 U
(43) Veröffentlichungstag der Anmeldung: 01.03.2017
(73) Patentinhaber: Maag Automatik GmbH, 63762 Großostheim (DE)
(72) Erfinder: WILLEMSEN, Thomas, 63457 Hanau (DE)
(74) Vertreter: Spranger, Stephan
(86) Internationale Anmeldenummer: PCT/EP2015/000817
(87) Internationale Veröffentlichungsnummer: WO 2015/161918

(56) Entgegenhaltungen:
- CH-A- 317 399
- DE-A1- 4 414 754
- DE-A1- 10 034 933
- DE-C1- 4 411 165
- GB-A- 468 482
- US-A- 2 804 968
- US-A- 3 976 254
- US-A- 4 573 563
- US-A1- 2014 113 784

## Beschreibung

Die Erfindung betrifft eine Führungswalze eines Einzugswalzenpaares einer Granuliervorrichtung von Kunststoffsträngen. Die Führungswalze weist einen Kern und mindestens eine äußere Hartgummilage auf.

Aus der Druckschrift EP 0 013 575 A1 ist ein Granulator zum Granulieren von Kunststoffsträngen bekannt, der ein derartiges Einzugswalzenpaar aufweist, wobei die Walzen des Einzugswalzenpaares Mantelflächen aus Stahl besitzen. Im Gegensatz zu dieser Anmeldung weisen üblicherweise Granuliervorrichtungen mit einem derartigen Einzugswalzenpaar eine Führungswalze und eine Antriebswalze auf. Dabei kann die Antriebswalze durchaus Mantelflächen aus Stahl aufweisen.

Die Führungswalze, welche die Kunststoffstränge der Granuliervorrichtung dem Granulator beispielsweise durch Niederdrücken der Kunststoffstränge zuführt, weist jedoch üblicherweise einen Kern und mindestens eine äußere Hartgummilage auf, wie es aus der Druckschrift DE 197 01 926 C2 bekannt ist, bei der jedoch die äußere Hartgummilage profiliert ist und in Längsrichtung Schlitze und Gummistege aufweist, die nachgeben können, um sich unterschiedlichen Kunststoffstrangdicken anzupassen. Jedoch ist den unterschiedlichen Führungswalzen gemeinsam, dass bei Verschleiß der Hartgummilage, sei es mit oder ohne Längsschlitzen und Längsstegen, die gesamte Führungswalze mit hohem Aufwand neu beschichtet werden muss.

Dabei fallen nicht nur Montagekosten beim Ausbau der auszuwechselnden Führungswalze und beim Einbau einer neu beschichteten Führungswalze an, sondern auch Transportkosten und Lagerkosten, zumal sich mehrere Einzugswalzen im Umlauf zum Entfernen verbrauchter Hartgummilagen und zum Aufbau neuer Hartgummilagen befinden.

Aus der Druckschrift DE 199 50 643 A1 ist für Offset-Rollenrotationsdruckmaschinen eine Gummizylinderhülse bekannt mit einer durch Luft aufweitbaren inneren Trägerhülse, einer darüber angeordneten kompressiven Schicht und schließlich einer äußeren Deckschicht. Dabei weisen diese Schichten Stoßstellen auf, an denen die aus Platten zusammengesetzten Schichten zu einer zylindrischen Beschichtung zusammengeschweißt oder geklebt sind.

Diese Stoßfuge einer Gummizylinderhülse ist bei Offset-Rollenrotationsdruckmaschinen unkritisch, da bei der Rotation die Stoßstelle gegenüber einem Spannkanal eines Zylinders, der zwischen dem axial ausgerichteten Spannkanal Druckplatten auf seiner Mantelfläche aufweist, synchronisiert werden kann. Bei Führungswalzen mit äußerer Hartgummischicht einer Granuliervorrichtung, bei der am Lebensdauerende der Hartgummischicht die Restlage entfernt werden muss und eine neue Hartgummilage üblicherweise auf einem zylindrischen metallischen Kern aufvulkanisiert wird, besteht diese Möglichkeit des Ausgleichs von Stoßstellenunebenheiten jedoch nicht.

Das US-Patent US 2,804,968 beschreibt ein Zuführeinrichtung für strangförmiges Material mit einer Führungswalze, welche einen Kern und mindestens eine äußere Hartgummilage dort herum aufweist.

Die deutsche Offenlegungsschrift DE 100 34 933 A1 beschreibt eine Walze für technische oder graphische Anwendungen, bei welcher eine Hartgummilage eine Hülse bildet, die auf den Kern einer Führungswalze aufschiebbar und von dem Kern abziehbar ist.

Aufgabe der Erfindung ist es, eine Führungswalze zu schaffen, mit der die Nachteile im Stand der Technik überwunden werden und Transport- und Lagerungskosten beim Erneuern der Führungswalzen mit äußerer Hartgummischicht eingespart werden können.

Die Erfindung weist eine Führungswalze eines Einzugswalzenpaares einer Granuliervorrichtung von Kunststoffsträngen auf. Die Führungswalze weist einen Kern und mindestens eine äußere Hartgummilage auf. Die mindestens eine Hartgummilage bildet eine Hülse, die auf den Kern der Führungswalze aufschiebbar und von dem Kern abziehbar ist.

Diese mindestens aus einer äußeren Hartgummilage gebildete Hülse hat den Vorteil, dass der Hartgummi nicht mehr auf den Kern der Führungswalze aufzuvulkanisieren ist. Zudem wird das Ablösen von dem Kern erleichtert, indem die Hartgummihülse von dem Kern einfach abgezogen wird. Durch dieses System des Auswechselns der Hülse können erhebliche Montagezeiten eingespart werden. Da lediglich die Hülse aus einem Hartgummimaterial bei Beschädigung oder Verschleiß auszuwechseln ist, kann der Kunde einfach und unkompliziert eine neuwertige Hülse aus Hartgummi bestellen und diese selbst auf den verbliebenen Kern aufziehen. Die Notwendigkeit eines vollständigen Ausbaus der Führungswalze zur Neubeschichtung des Kerns entfällt und ein Verschicken der Führungswalze zur Neubeschichtung entfällt. Da sich keine Führungswalzen mehr im Umlauf zum Entschichten und Beschichten beispielsweise mittels Vulkanisierung befinden, können sich die Kosten sowohl für die Lagerhaltung als auch die Kosten, die durch Hin- und Rücktransport- und Versandkosten bei einer Neubeschichtung jedes Mal anfallen, für den Kunden verringern. Auch ist somit ein relativ einfacher Austausch von Führungswalzen mit unterschiedlichen Hartgummieigenschaften für unterschiedliche zu granulierende Strangmaterialien möglich.

Erfindugsgemäß ist es in einer ersten Ausführungsform gemäss Anspruch 1 vorgesehen, dass mindestens einer der Stirnbereiche des Kerns ein Außengewinde aufweist. Ferner weist die Führungswalze eine Ringmutter auf, die auf dieses Außengewinde des Kerns im Stirnbereich geschraubt werden kann. Die Ringmutter weist ihrerseits eine erste Konusfläche auf, welche mit einer ersten Gegenkonusfläche der eine Hülse bildenden äußeren Hartgummilage in Eingriff steht. Ein gegenüberliegender Stirnbereich des Kerns weist eine zweite Konusfläche auf, die mit einer gegenüberliegenden zweiten Gegenkonusfläche der eine Hülse bildenden äußeren Hartgummilage in Eingriff steht. Dabei ist die eine Hülse mit ihren zwei Gegenkonusflächen zwischen den zwei Konusflächen des Kerns und der Ringmutter zentriert.

Somit kann in vorteilhafter Weise gewährleistet werden, dass trotz eines minimalen zylindrischen Spalts zwischen der Mantelfläche des Kerns der Führungswalze und einer Innenfläche der Hülse aus mindestens einer Hartgummilage beim Betrieb keine Unwucht entsteht, da die Konusflächen und Gegenkonusflächen die Hartgummilage relativ zur Drehachse der Führungswalze zentrieren. Durch entsprechende Härte und Steifigkeit einer derartigen selbstzentrierenden Hülse aus Hartgummi wird gewährleistet, dass keine Formänderung der äußeren Hartgummilage beim Einklemmen und zentrieren derselben zwischen den Konusflächen von Kern Ringmutter auftritt.

Für den Fall, dass der Kraftschluss zwischen Konusflächen und Gegenkonusflächen nicht ausreicht, um ein Verdrehen der eine Hülse bildenden Hartgummilage gegenüber dem Kern der Führungswalze zu verhindern, ist es in einer weiteren Ausführungsform der Erfindung vorgesehen, dass aus dem beispielsweise zylindrischen Kern eine Feder, die in Achsrichtung ausgerichtet ist, herausragt. Dabei steht die Feder mit einer inneren Längsnut der äußeren Hartgummilage beim Aufschieben und beim Abziehen formschlüssig in Eingriff. Mit diesem Formschluss kann sichergestellt werden, dass die Hülse aus Hartgummi ihre Position über dem Kern, die auch als Registrierung oder als Registrierposition bezeichnet wird, während des Betriebs beibehält.

Alternativ weist in einer zweiten Ausführungsform der Erfindung gemäss Anspruch 1 die Hülse der Hartgummilage einen Innenkonus über die gesamte Führungswalzenbreite in Achsrichtung auf, der mit einem Außenkonus des Kerns kraftschlüssig verbindbar ist. Ein solcher langgestreckter Innenkonus in Kombination mit dem Außenkonus des Kerns ermöglicht, einen lösbaren und kraftschlüssigen Verbund zwischen dem Kern und der eine Hülse bildenden Hartgummilage bereitzustellen. Außerdem kann die axiale Positionierung zwischen dem Kern mit Außenkonus und der Hülse mit Innenkonus durch eine Ringmutter gesichert werden.

Sollte der Kraftschluss zwischen Außenkonus des Kerns und Innenkonus der Hülse nicht ausreichen, um ein Reiben und Verrutschen zwischen konischem Kern und konischer Hülse zu vermeiden, ist es ebenfalls möglich, dass aus dem Außenkonus des Kerns eine Feder herausragt, die in einer Längsnut der Hülse angeordnet ist und somit eine formschlüssige Verbindung zwischen Kern und Hülse gewährleistet.

Falls die Härte und Steifigkeit der Hartgummilage nicht ausreicht, um eine derartige selbsttragende formstabile Hülse bereitzustellen, so ist alternativ vorgesehen, die äußere Hartgummilage auf einen Verstärkungszylinder aufzuvulkanisieren oder aufzukleben oder aufzuspannen. Dies hat den Vorteil, dass auch äußere Gummilagen vorgesehen werden können, die flexibler und elastischer sind als herkömmliche Hartgummilagen, entweder dadurch, dass sie die bekannten Längsschlitze oder Längsstege aufweisen oder dass das Material äußerst nachgiebig ist und sich an unterschiedliche Strangdicken besser anpassen kann.

Weiterhin ist es vorgesehen, dass der Verstärkungszylinder die Gegenkonusflächen aufweist, die zwischen der stirnseitigen Konusfläche des Kerns und der Konusfläche der Ringmutter geklemmt und zentriert angeordnet sind. Damit übernimmt der Verstärkungszylinder die Zentrierung und Klemmung der eine Hülse bildenden Gummilage, die nun nicht notwendiger Weise einen Hartgummi aufweisen muss, da nun die Hülse einen Verbund aus Gummilage und Verstärkerzylinder bildet. Zur Verdrehsicherung zwischen Verstärkungszylinder und Außenmantel des Kerns kann der Verstärkungszylinder eine innere Längsnut aufweisen, die mit der aus dem Außenmantel des Kerns herausragenden Feder in Eingriff steht.

Der die Gummilage verstärkende Verstärkungszylinder kann einen Duroplast, einen faserverstärkten Kunststoff oder eine Metalllegierung aufweisen. Jedes dieser drei Materialien hat unterschiedliche Vor- und Nachteile, die je nach Kostenstruktur, Lagerungsmöglichkeiten und thermischen Anforderungen an die Führungswalze einsetzbar sind. Ein Duroplast zeichnet sich durch eine relativ hohe Wärmebeständigkeit, Wärme- und Elektroisolation und hohe Formstabilität aus. Ein Hülsenträger aus faserverstärktem Kunststoff hat den Vorteil eines geringen Gewichts, hoher Wärme- und Elektroisolation und kostengünstiger Herstellung.

Ein Hülsenträger aus Metall besitzt eine gute Wärmeableitung, hohe elektrische Leitfähigkeit zum Abbau elektrostatischer Aufladungen der eine Hülse bildenden Hartgummilage. Darüber hinaus ermöglicht der metallische Werkstoff ein sehr präzises Bearbeiten und Polieren der Gegenkonusflächen zum Justieren der Hülse, so dass ein Zentrieren mit Hilfe der ersten vorzugsweise metallischen Konusfläche der Ringmutter und der vorzugsweise ebenfalls metallischen zweiten Konusfläche im Stirnbereich des Kerns beim Einklemmen zwischen den Konusflächen reproduzierbar und zuverlässig erfolgen kann.

In einer weiteren Ausführungsform der Erfindung ist zwischen der eine Hülse bildenden äußeren Hartgummilage mit dem Kern ein Hülsenträger angeordnet, auf dem die Hartgummilage mit oder ohne Verstärkungszylinder angeordnet ist.

Um die Hartgummilage mit oder ohne Verstärkungszylinder zu zentrieren und zu klemmen, weist ein erster Endbereich des Hülsenträgers ein Außengewinde auf, über das die eine Ringmutter geschraubt werden kann, die eine erste Konusfläche aufweist. Die erste Konusfläche der Ringmutter steht mit einer ersten Gegenkonusfläche der eine Hülse bildenden äußeren Hartgummilage in Eingriff. Auf einem gegenüberliegenden zweiten Endbereich des Hülsenträgers ist eine weitere Konusfläche angeordnet, die mit einer gegenüberliegenden zweiten Gegenkonusfläche der eine Hülse bildenden äußeren Hartgummilage in Eingriff steht. Die Hülse mit ihren Gegenkonusflächen ist durch die Konusflächen des Hülsenträgers und der Ringmutter zentriert. Damit übernimmt der Hülsenträger die bisher beschriebene Funktion eines Kerns mit einer auf einen Endbereich aufgebrachter ersten Konusfläche der Ringmutter und einer zweiten Konusfläche auf einem zweiten Endbereich des Hülsenträgers.

Dieses hat den Vorteil, dass das Profil und die Mantelfläche des Kerns frei gestaltet werden kann. Der Kern kann im Profil einen runden Querschnitt aufweisen, so dass eventuell eine Nut/Federverbindung zwischen Kern und Hülsenträger erforderlich wird. Der Kern kann aber auch Profile bzw. Querschnitte aufweisen, die formschlüssig mit entsprechenden Innenprofilen des Hülsenträgers in Eingriff stehen. So kann beispielsweise der Kern statt zylindrisch ausgebildet zu sein ein dreieckiges, ein quadratisches, ein sechseckiges oder ein polygonales Profil aufweisen. Außerdem ist es möglich, statt einer Nut/Federverbindung eine Nut/Kugelverbindung oder Nut/Walzenverbindung vorzusehen. Darüber hinaus ist es möglich, dass der Kern an einer Position der Walzenbreite einen Wulst aufweist, der mit einer Aussparung in dem Hülsenträger in Eingriff steht. Auch kann zu einem stirnseitigen Ende hin der Kern eine Abflachung aufweisen, die mit einem entsprechenden Vorsprung aus der Innenfläche des Hülsenträgers in Eingriff steht.

In einer weiteren Ausführungsform der Erfindung ist es vorgesehen, dass der Hülsenträger integraler Bestandteil des Kerns ist, wobei Kern und Hülsenträger stoffschlüssig verbunden sein können, beispielsweise durch eine Klebstoffschicht.

Weiterhin ist es vorgesehen, dass der Kern der Führungswalze stirnseitig angeordnete Achszapfen aufweist, die in einem Gehäuse der Granuliervorrichtung schwenkbar gelagert sind. Diese stirnseitigen Achszapfen können an jeder beliebigen Form von zentralem Kern der Führungswalze angeordnet sein. Ist als Kern eine Hohlwelle vorgesehen, so weist der Kern in seinen Stirnbereichen Stirnscheiben auf, aus denen die Achszapfen herausragen können. Erfindungsgemäß besonders bevorzugt kann es sein, wenn zur leichteren Erreichbarkeit die erfindungsgemäße Führungswalze durch die Verschwenkbarkeit auch von der bevorzugt fest im Gehäuse drehbar montierten Antriebswalze abhebbar sein kann.

Alternativ ist es auch möglich, dass der Kern der Führungswalze eine Hohlwelle aufweist, die drehbar auf einer Starrachse gelagert ist. Dazu werden auf der Starrachse mindestens ein Loslager und ein Festlager angeordnet, die dafür sorgen, dass ein Hohlzylinder auf der Starrachse als Hohlwelle rotieren kann.

In einer weiteren Ausführungsform der Erfindung ist es vorgesehen, dass der Kern der Führungswalze radiale Bohrungen aufweist, die mit einer zentralen Achsbohrung kommunizieren, wobei die zentrale Achsbohrung des Kerns einen Druckluftanschluss aufweist. Über diesen Druckluftanschluss kann Druckluft aus den radialen Bohrungen auf die Innenfläche entweder einer eine Hülse bildenden Hartgummilage oder auch auf einen Verstärkungszylinder der Hartgummilage gerichtet sein.

Um mit der Druckluft einen Druck auf die Innenfläche einer Hartgummilage oder einer Hartgummilage mit Verstärkungszylinder ausüben zu können, und damit ein Abziehen oder ein Aufschieben der auszuwechselnden Hülse aus Hartgummi zu erleichtern, ist es vorgesehen, dass zwischen der Hohlwelle mit radialen Öffnungen bzw. der Hohlwelle mit radialen Bohrungen und der Hartgummilage oder einer Verstärkungslage eine Zwischenlage angeordnet ist, die ein kompressibles Material aufweist. Beim Beaufschlagen der radialen Bohrungen oder radialen Öffnungen mit Druckluft wird die kompressible Schicht nach außen gegen die Innenfläche der Hartgummilage bzw. des Verstärkungszylinders gepresst, so dass ein Druckluftspalt ausgebildet wird, der das Abziehen bzw. das Aufschieben der Hartgummilage bzw. des Verstärkungszylinders mit Hartgummilage deutlich erleichtert.

Die Erfindung wird im Folgenden anhand der beispielhaft erläuterten Ausführungsformen näher beschrieben werden.
- Figur 1: zeigt eine schematische perspektivische Außenansicht einer Führungswalze mit auswechselbarer äußerer Hartgummilage gemäß einer ersten Ausführungsform der Erfindung;
- Figur 2: zeigt eine schematische perspektivische Ansicht mit teilweise längsgeschnittenen Bereichen der Führungswalze gemäß Figur 1;
- Figur 3: zeigt einen schematischen Längsschnitt der Führungswalze gemäß Figur 1;
- Figur 4: zeigt einen schematischen Längsschnitt einer Führungswalze gemäß einer weiteren Ausführungsform der Erfindung;
- Figur 5: zeigt eine perspektivische Ansicht mit teilweise längsgeschnittenem Bereich einer Führungswalze mit auswechselbarer äußerer Hartgummilage gemäß einer zweiten Ausführungsform der Erfindung;
- Figur 6: zeigt einen schematischen Längsschnitt einer Führungswalze gemäß einer weiteren bevorzugten Ausführungsform der Erfindung;
- Figur 7: zeigt einen schematischen Längsschnitt einer Führungswalze gemäß einer weiteren bevorzugten Ausführungsform der Erfindung;
- Figur 8: zeigt einen schematischen Längsschnitt einer Führungswalze gemäß einer weiteren bevorzugten Ausführungsform der Erfindung;
- Figur 9: zeigt eine schematische perspektivische Außenansicht einer Führungswalze mit auswechselbarer äußerer Hartgummilage gemäß einer weiteren bevorzugten Ausführungsform der Erfindung;
- Figur 10: zeigt einen schematischen Längsschnitt einer Führungswalze gemäß Figur 9;
- Figur 11: zeigt einen schematischen Längsschnitt einer Führungswalze gemäß einer weiteren bevorzugten Ausführungsform der Erfindung;
- Figur 12: zeigt einen schematischen Längsschnitt einer Führungswalze gemäß einer weiteren bevorzugten Ausführungsform der Erfindung;
- Figur 13: zeigt einen schematischen Längsschnitt einer Führungswalze gemäß einer weiteren bevorzugten Ausführungsform der Erfindung;
- Figur 14: zeigt mit den Figuren 14A bis 14F schematische Querschnitte einer Führungswalze mit Formschlüssen zwischen der Hartgummilage, einem Hülsenträger und dem Kern der Führungswalze;
- Figur 15: zeigt schematisch die Verwendung einer erfindungsgemäßen Führungswalze in einer Stranggranuliervorrichtung.

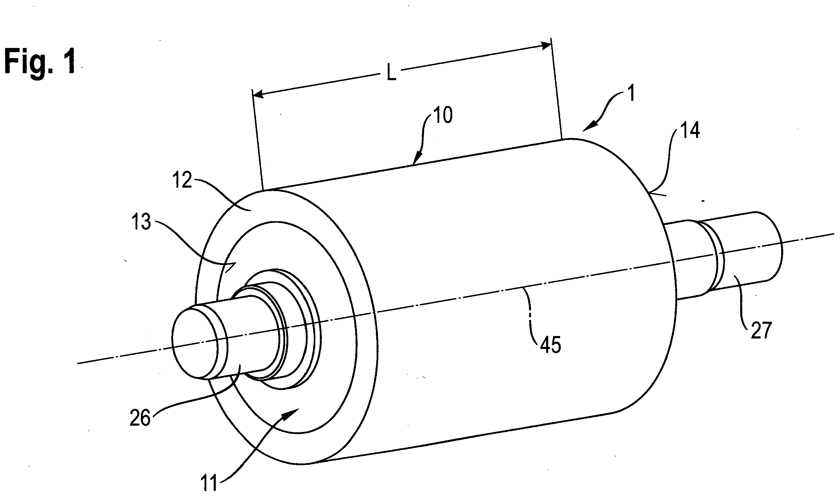

Figur 1 zeigt eine schematische perspektivische Außenansicht einer Führungswalze 1 mit auswechselbarer äußerer Hartgummilage 12 gemäß einer ersten Ausführungsform der Erfindung. Die äußere Hartgummilage 12 bildet eine Hülse 10 aus, die auf einem Kern 11 der Führungswalze 1 aufziehbar bzw. abziehbar angeordnet ist. Dazu bedeckt die äußere Hartgummilage 12 die volle Walzenbreite L koaxial zur Achse 45 der Führungswalze 1. Figur 1 zeigt außerdem einen ersten Stimbereich 13 mit einem ersten Achszapfen 26 und einen zweiten Stirnbereich 14 mit einem zweiten Achszapfen 27, wobei die Achszapfen 26 und 27 aus den seitlichen Stirnbereichen 13 und 14 herausragen, um beispielsweise die Führungswalze 1 schwenkbar in einem Granulatorgehäuse zu lagern.

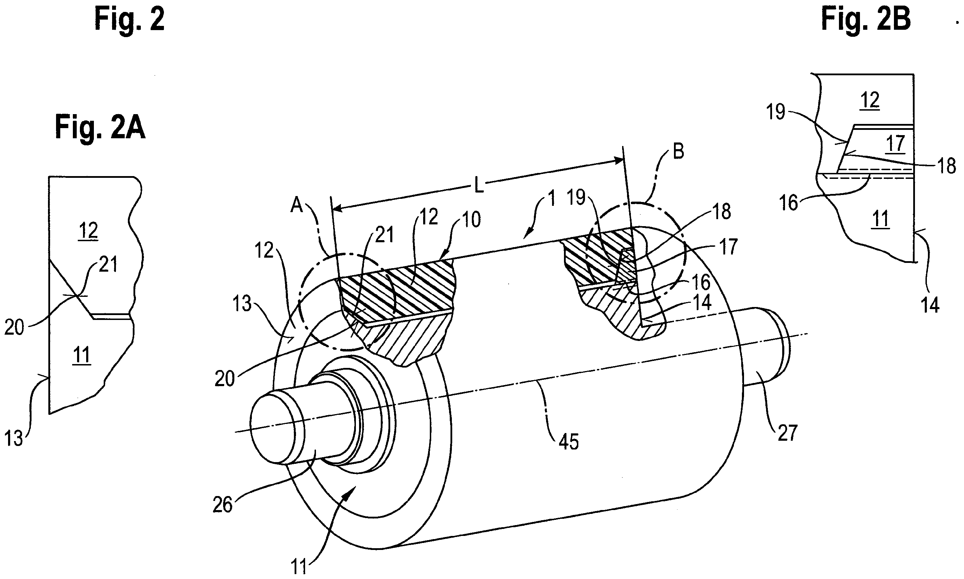

Figur 2 zeigt eine schematische perspektivische Ansicht mit teilweise längsgeschnittenen Bereichen der Führungswalze 1 gemäß Figur 1. Durch die teilweise längsgeschnittenen Bereiche A und B der Führungswalze 1 werden der innere Aufbau und die Komponenten, die es ermöglichen, dass ein Abziehen einer verbrauchten Hartgummilage 12 und ein Aufziehen einer erneuerten oder neuen äußeren Hartgummilage 12 auf den Kern 11 der Führungswalze 1 erleichtert werden, verdeutlicht.

Dazu zeigt Figur 2A das Detail A vergrößert im Längsschnitt, wobei die äußere Hartgummilage mit dem Bezugszeichen 12 markiert ist. Zwischen der äußeren Hartgummilage 12 und dem in Figur 2A gezeigten Stirnbereich 13 des Führungszylinders 1 ist in dem Stirnbereich 13 des Kerns 11 eine Konusfläche 20 angeordnet, die mit einer Gegenkonusfläche 21 der Hartgummilage 12 in Eingriff steht. In dem gegenüberliegenden Stirnbereich 14, dessen Längsschnitt vergrößert in Figur 2B gezeigt wird, ist auf dem Kern 11 ein Außengewinde 16 angeordnet, das mit einem Innengewinde einer Ringmutter 17 in Eingriff steht. Die Ringmutter 17 weist eine Konusfläche 18 auf, die ihrerseits mit einer Gegenkonusfläche 19 der Hartgummilage 12 in Eingriff steht. Durch die Ausbildung der Konusflächen 18 und 20 sowie der Gegenkonusflächen 19 und 21 der Hartgummilage 12 wird diese auf dem Kern der Führungswalze 1 zentriert und zwischen den Konusflächen 20 des Kerns 11 und 21 der Ringmutter 17 kraftschlüssig geklemmt.

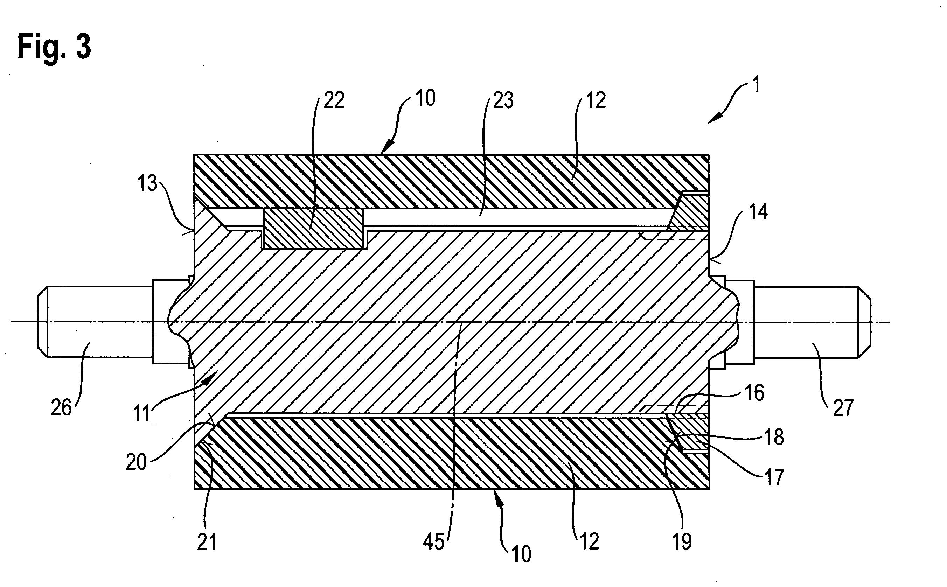

Figur 3 zeigt einen schematischen Längsschnitt der Führungswalze 1 gemäß Figur 1. Wenn die Klemmwirkung und der Kraftschluss zwischen den Konusflächen 19 und 21 und den Gegenkonusflächen 18 und 20 nicht ausreicht, um ein Verdrehen der äußeren Hartgummilage 12 gegenüber dem Kern 11 zu verhindern, so wird mit Figur 3 zusätzlich zu dem Kraftschluss zwischen dem Konusflächen 18 und 20 und den Gegenkonusflächen 19 und 21 eine Möglichkeit einer formschlüssigen Verbindung gezeigt. Dazu weist der Kern 11 der Führungswalze 1 eine Feder 22 auf, die aus einer äußeren Mantelfläche des Kerns 11 herausragt und mit einer inneren Längsnut 23 der äußeren Hartgummilage 12 in Eingriff steht.

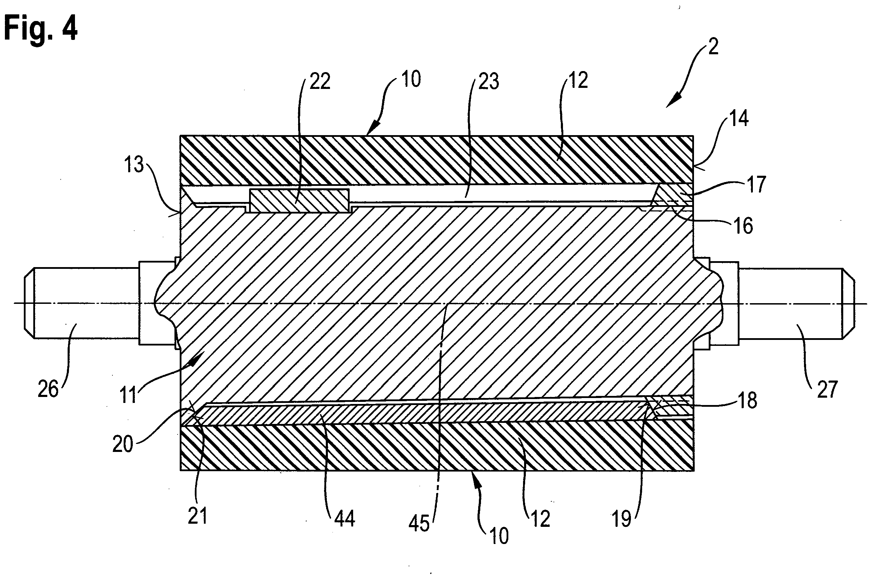

Komponenten mit gleichen Funktionen wie in den Figuren 1 bis 3 werden in den nachfolgenden Figuren 4 bis 14 unterschiedlicher Ausführungsformen der Erfindung mit gleichen Bezugszeichen gekennzeichnet und nicht extra erörtert.

Figur 4 zeigt einen schematischen Längsschnitt einer Führungswalze 2 gemäß einer weiteren bevorzugten Ausführungsform der Erfindung. In dieser Ausführungsform wird die eine Hülse 10 bildende Hartgummilage 12 durch einen Verstärkungszylinder 44 stabilisiert und gestützt, auf den die Hartgummilage 12 vulkanisiert, aufgeklebt oder aufgespannt sein kann. Die zentrierten Gegenkonusflächen 19 und 21 weist nun im Wesentlichen der Verstärkungszylinder 44 auf, so dass die Hartgummilage 12 nicht durch die auftretenden Zentrierkräfte belastet wird. Dazu kann der Verstärkungszylinder 44 aus Metall oder einem Duroplast oder einem faserverstärkten Kunststoff bestehen.

Die Gegenkonusflächen 19 und 21 des Verstärkungszylinders 44 wirken wie bisher mit der ersten Konusfläche 18 der auf dem Außengewinde 16 des Kerns 11 in dem Stirnbereich 14 aufgebrachten Ringmutter 17 und der in dem Stirnbereich 13 des Kerns 11 angeordneten zweiten Konusfläche 20 zusammen. Dabei sind die Gegenkonusflächen 19 und 21 des Verstärkungszylinders 44 zwischen den Konusflächen 18 und 20 zentriert und nach Aufschrauben der Ringmutter 17 auf das Außengewinde 16 des Stirnbereichs 14 des Kerns 11 kraftschlüssig geklemmt. Dieser Verstärkungszylinder 44 kann erforderlich sein, um durch seine Formstabilität und Steifigkeit die Klemm- und Zentrierkräfte aufzunehmen, ohne sich zu verformen, wenn die Formstabilität und Steifigkeit der Hartgummilage 12 unzureichend ist.

Ferner zeigt Figur 4 außerdem, dass bei dieser weiteren bevorzugten Ausführungsform der Erfindung die aus dem Außenmantel des Kerns 11 herausragende Feder 22 nun in einer Längsnut 23 angeordnet ist, die im Wesentlichen oder auch vollständig in dem Verstärkungszylinder 44 angeordnet ist.

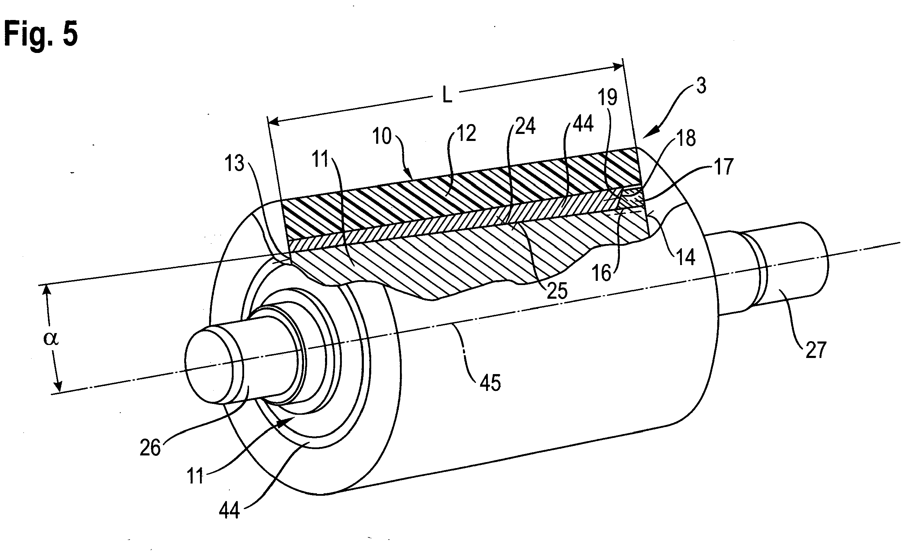

Figur 5 zeigt eine perspektivische Ansicht mit teilweise längsgeschnittenem Bereich einer Führungswalze 3 mit auswechselbarer äußerer Hartgummilage 12 gemäß einer zweiten Ausführungsform der Erfindung. In dieser Ausführungsform wird ein modifizierter Verstärkungszylinder 44 eingesetzt, auf den die Hartgummilage 12 aufvulkanisiert ist. Der Verstärkungszylinder 44 weist in Achsrichtung einen inneren Konus 24 in Längsrichtung auf mit einem Neigungswinkel α zwischen 1°≤ α ≤5° gegenüber der Achse 45 der Führungswalze 3. Die Hülse 10 aus Hartgummilage 12 und Verstärkungszylinder 44 ist auf einem Außenkonus 25 des Kerns 11 mit entsprechend angepasstem Neigungswinkel 1°≤ α ≤5° angeordnet. Zur axialen Fixierung ist, wie in Figur 5 gezeigt, wieder die Ringmutter 17 auf dem Gewinde 16 in dem Stirnbereich 14 mit der Konusfläche 18 eingesetzt, die mit der Gegenkonusfläche 19 zusammenwirkt, um die Hülse 10 bildende Hartgummilage 12 mit konischem Verstärkungszylinder 44 axial zu fixieren.

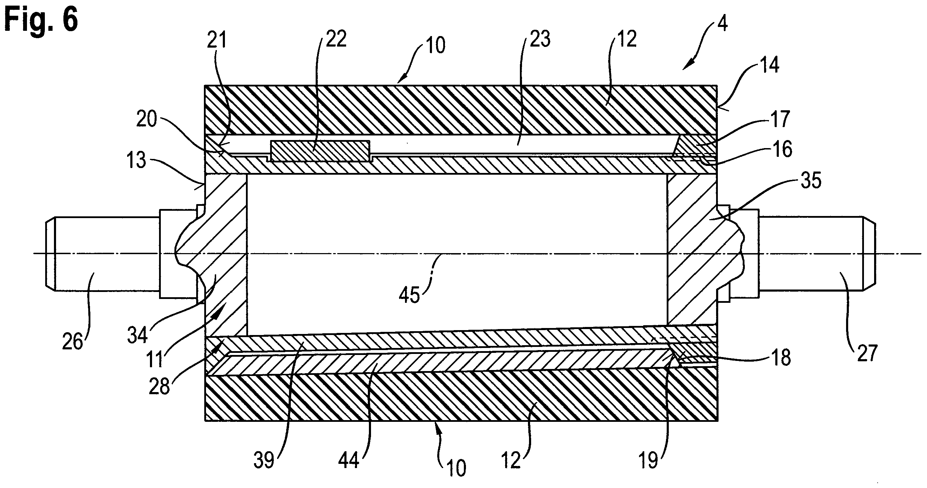

Figur 6 zeigt einen schematischen Längsschnitt einer Führungswalze 4 gemäß einer weiteren bevorzugten Ausführungsform der Erfindung. Diese Ausführungsform der Erfindung unterscheidet sich von den bisher gezeigten Ausführungsformen dadurch, dass der Kern 11 nun eine Hohlwelle 28 aufweist, auf der die eine Hülse 10 bildende Hartgummilage 12 mit einem Verstärkungszylinder 44 geklemmt und zentriert ist. Die Hohlwelle 28 setzt sich aus einem Hohlzylinder 39 und zwei Stirnscheiben 34 und 35 zusammen, wobei die Stirnscheibe 34 den Achszapfen 26 und die Stirnscheibe 35 den Achszapfen 27 aufweist, die aus den Stirnbereichen 13 und 14 herausragen, um die Führungswalze 4 in einem Gehäuse beispielsweise schwenkbar lagern zu können.

In dieser Ausführungsform weist nun der Außenmantel des Hohlzylinders 39 die Konusfläche 20 und die Ringmutter 17 die Konusfläche 19 auf, zwischen denen der Verstärkungszylinder 44, auf den die Hartgummilage 12 aufvulkanisiert oder aufgeklebt oder aufgespannt ist, zentriert und geklemmt ist. Außerdem zeigt Figur 6 eine formschlüssige Verbindung zwischen der eine Hülse 10 bildende Hartgummilage 12 mit Verstärkungszylinder 44 und dem Hohlzylinder 39, wobei aus einem Außenmantel des Hohlzylinders 39 die Feder 22 hinausragt, die mit der Längsnut 23 in dem Verstärkungszylinder 44 in Eingriff steht.

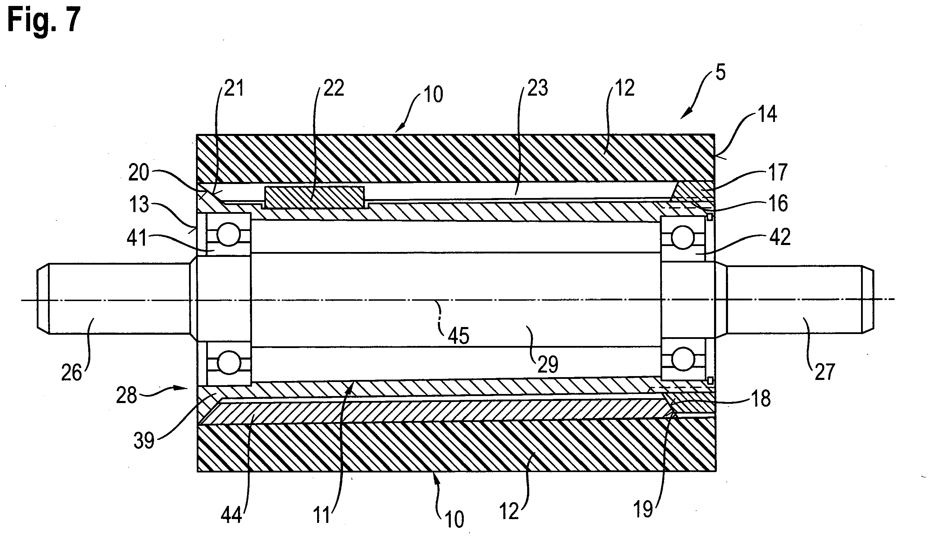

Figur 7 zeigt einen schematischen Längsschnitt einer Führungswalze 5 gemäß einer weiteren bevorzugten Ausführungsform der Erfindung. In dieser weiteren bevorzugten Ausführungsform ist wiederum der Kern 11 als eine Hohlwelle 28 ausgebildet, die auf einer Starrachse 29 mithilfe der Lager 41 und 42 gelagert ist. Der Hohlzylinder 39 der Hohlwelle 28 weist wiederum die Konusfläche 20 auf, die mit einer Gegenkonusfläche 21 der die Hülse 10 bildende Hartgummilage 12 mit Verstärkungszylinder 44 zusammenwirkt. Der Außenmantel des Hohlzylinders 39 weist in dem Stirnbereich 14 das Außengewinde 16 auf, mit dem die Ringmutter 17 in Eingriff steht. Zwischen der Konusfläche 18 der Ringmutter 17 und der Konusfläche 20 des Stirnbereichs 13 des Kerns 11 ist der Verstärkungszylinder 44 mit seinen Gegenkonusflächen 19 und 21 zentriert und geklemmt.

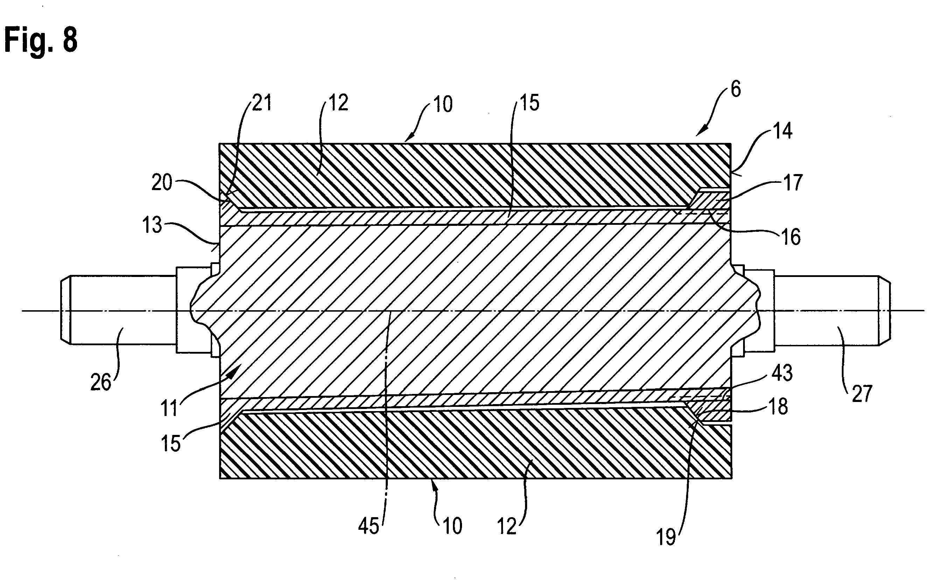

Figur 8 zeigt einen schematischen Längsschnitt durch eine Führungswalze 6 gemäß einer weiteren bevorzugten Ausführungsform der Erfindung. Diese Ausführungsform unterscheidet sich von den vorhergehend gezeigten Ausführungsformen dadurch, dass nun ein Hülsenträger 15 zwischen der Hülse 10 und dem Kern 11 eingesetzt wird, um die Hülse 10 mit der Hartgummilage 12 auf dem Kern 11 zu fixieren und zu zentrieren.

In dieser weiteren bevorzugten Ausführungsform weist die eine Hülse 10 bildende Hartgummilage 12 keinen Verstärkungszylinder auf, sondern ist wie in Figur 3 mit ihren Gegenkonusflächen 19 und 21 zwischen der ersten Konusfläche 18 der Ringmutter 17 und der zweiten Konusfläche 20, die nun der Hülsenträger 15 aufweist, eingespannt. Dazu weist der Hülsenträger 15 in dem Stirnbereich 13 die Konusfläche 20 auf. Auf einem gegenüberliegenden Endbereich 43 ist auf einem Außenmantel des Hülsenträgers 15 das Außengewinde 16, das mit der Ringmutter 17, welche die Konusfläche 18 aufweist, in Eingriff steht. Somit ist die Hülse 10 bildende Hartgummilage 12 mit ihren Gegenkonusflächen 19 und 21 auf dem Hülsenträger 15 zentriert und geklemmt.

Dieser Hülsenträger 15 kann mit dem Kern 11 formschlüssig dadurch verbunden sein, dass einerseits wie bisher eine in dem gezeigten Längsschnitt der Figur 8 nicht sichtbare Feder aus dem Außenmantel des Kerns 11 herausragt und mit einer in dieser Schnittebene nicht sichtbaren inneren Längsnut des Hülsenträgers 15 in Eingriff steht. Andererseits ist es auch möglich, einen Stab als Kern einzusetzen, der mindestens teilweise auf der Walzenbreite L ein eckiges, polygonales oder ovales Profil aufweist.

Auch für diese weitere bevorzugte Ausführungsform ist es möglich bei nicht ausreichender Festigkeit und Steifigkeit der Hartgummilage 12 einen Verstärkungszylinder einzusetzen. Neben einer formschlüssigen Verbindung zwischen dem Kern 11 und dem Hülsenträger 15, der seinerseits die Hülse 10 aus einer Hartgummilage 12 trägt, ist es auch möglich, diesen Hülsenträger 15 integral mit dem Kern 11 zu verbinden oder sogar einstückig einen Kern 11 mit integriertem Hülsenträger 15 herzustellen.

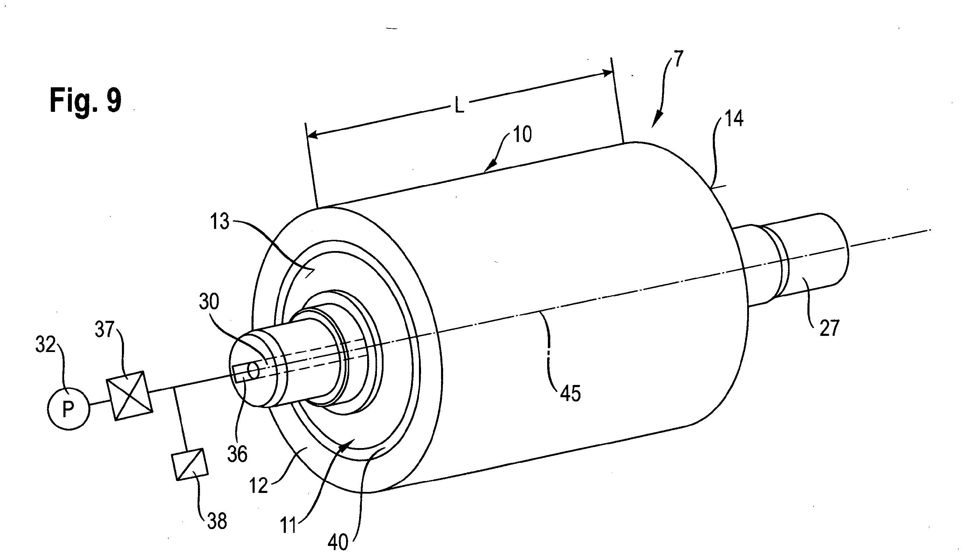

Figur 9 zeigt eine schematische perspektivische Außenansicht einer Führungswalze 7 mit auswechselbarer äußerer Hartgummilage 12 gemäß einer weiteren bevorzugten Ausführungsform der Erfindung. In dieser Ausführungsform der Erfindung ist zwischen der Hartgummilage 12 und dem Kern 11 eine kompressible Zwischenlage 40 angeordnet, die über eine zentrale Achsbohrung 30 mit Druckluft zusammengepresst werden kann, so dass die Hülse 10 aus einer Hartgummilage 12 von dem Kern 11 abgezogen werden kann, oder mithilfe von Druckluft, die über die zentrale Achsbohrung 30 zugeführt wird, auf den Kern aufgeschoben werden kann. Dazu weist die zentrale Achsbohrung 30 einen Druckluftanschluss 36 auf, der über ein Druckluftventil 37 mit einer Druckluftquelle 32 verbunden werden kann, wobei gleichzeitig ein Drucksensor 38 den Luftdruck beim Aufschieben und Abziehen der eine Hülse 10 bildenden Hartgummilage 12 überprüft.

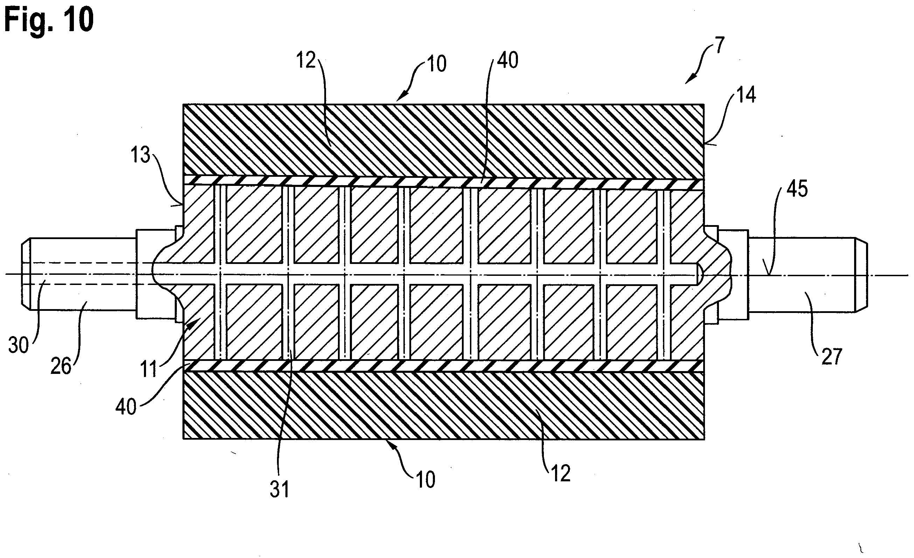

Figur 10 zeigt einen schematischen Längsschnitt der Führungswalze 7 gemäß Figur 9, wobei die Druckluft, die über die zentrale Achsbohrung 30 zugeführt werden kann, über weitere radiale Bohrungen 31 in dem Kern 11 in Richtung auf die kompressible Zwischenlage 40 ausgerichtet ist. Damit kann diese kompressible Zwischenlage 40 bei Aufbringen der Druckluft komprimiert werden, so dass ein zylindrischer Spalt zwischen dem Kern 11 und der Hülse 10 entsteht. Damit ist es möglich, dass problemlos die Hartgummilage 12 von dem Kern 11 abgezogen werden kann oder auch mit Unterstützung der Druckluft auf den Kern 11 nach Runderneuerung der äußeren Hartgummilage 12 wieder aufgeschoben werden kann.

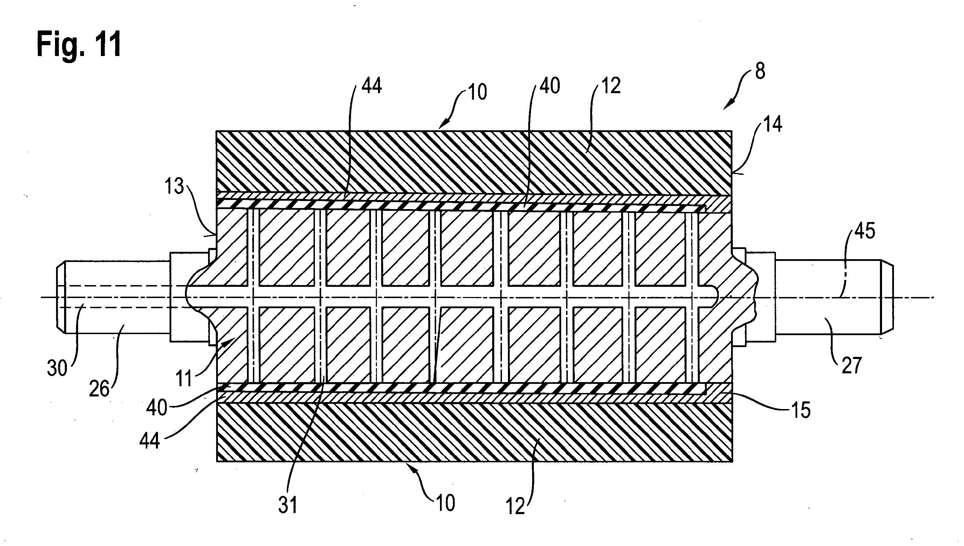

Figur 11 zeigt einen schematischen Längsschnitt einer Führungswalze 8 gemäß einer weiteren bevorzugten Ausführungsform der Erfindung. Diese Führungswalze 8 unterscheidet sich von der Ausführungsform der Figur 10 dadurch, dass zusätzlich ein Verstärkungszylinder 44 vorgesehen ist, auf den die Hartgummilage 12 aufvulkanisiert, aufgeklebt oder aufgespannt ist. Zwischen dem Kern 11 und dem Verstärkungszylinder 44 ist nun die kompressible Zwischenlage 40 angeordnet, die ein Abziehen oder ein Aufschieben der Hülse 10 auf den Kern 11 bei Aufbringen einer Druckluft in den radialen Bohrungen 31 unterstützt.

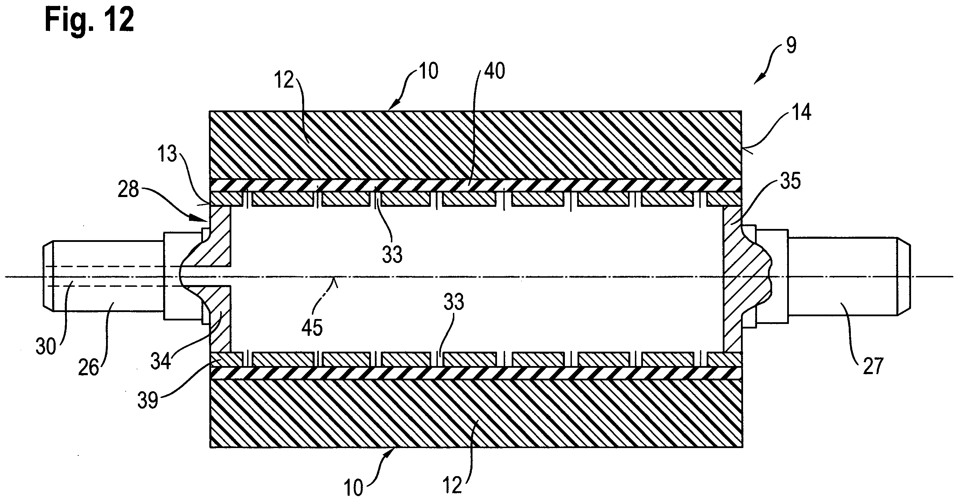

Figur 12 zeigt einen schematischen Längsschnitt einer Führungswalze 9 gemäß einer weiteren bevorzugten Ausführungsform der Erfindung. In dieser weiteren bevorzugten Ausführungsform ist die Hülse 10 auf eine Hohlwelle 28 mit Hohlzylinder 39 und Stirnscheiben 34 und 35 aufgebracht. Zwischen der Hülse 10 aus einer Hartgummilage 12 und der Hohlwelle 28 ist wiederum die kompressible Zwischenlage 40 angeordnet, die hier das Auswechseln der Hülse 10 mit der Hartgummilage 12 unter Beaufschlagung der Hohlwelle 28 über die zentrale Achsbohrung 30 mit Druckluft erleichtert. Die Druckluft komprimiert die kompressible Zwischenlage 40 über radiale Öffnungen 33, um zu ermöglichen, dass die Hülse 10 von dem Kern 11 problemlos abgezogen oder auch auf den Kern 11 aufgeschoben werden kann.

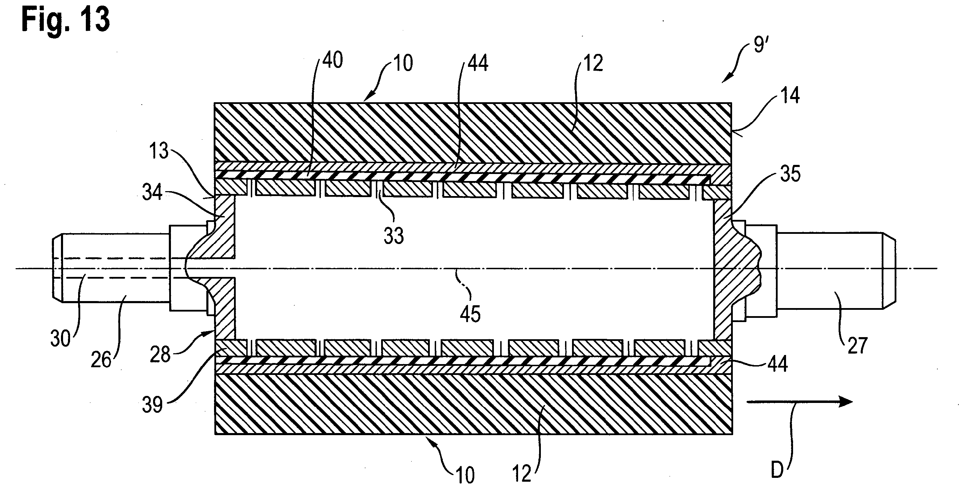

Figur 13 zeigt einen schematischen Längsschnitt einer Führungswalze 9' gemäß einer weiteren bevorzugten Ausführungsform der Erfindung. Diese Ausführungsform unterscheidet sich von der vorhergehenden Ausführungsform der Figur 12 lediglich dadurch, dass nun ein Verstärkungszylinder 44 vorgesehen ist, der die Stabilität und die Form der Hülse 10 stützt. Aufgrund der besonderen Ausbildung dieses Verstärkungszylinders 44 wird die Hülse 10 beim Beaufschlagen der Hohlwelle 28 mit Druckluft in Pfeilrichtung D von dem Hohlzylinder39 der Hohlwelle 28 durch den Luftdruck heruntergeschoben. Somit unterstützt die Druckluft das Abziehen der auszuwechselnden Hülse 10 mit Verstärkungszylinder 44.

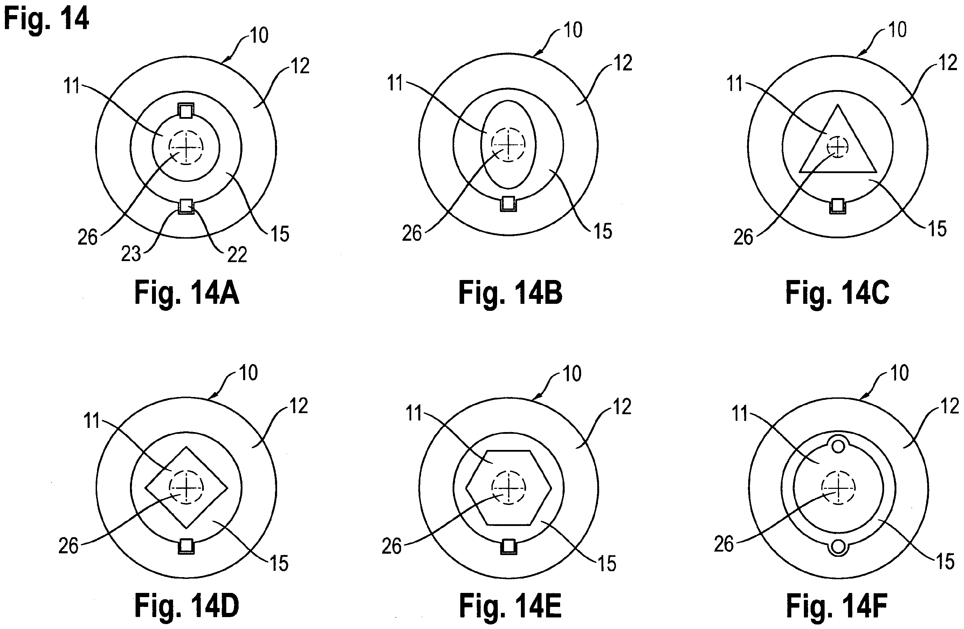

Figur 14 zeigt mit den Figuren 14A bis 14F schematische Querschnitte einer Führungswalze. Zwischen der Hartgummilage 12 und dem Kern 11 der Führungswalzen 1 bis 3 und 7 sowie 8 der Figuren 1 bis 5 und 8 bis 11 oder zwischen der Hartgummilage 12 und dem Hülsenträger 15 der Figur 6, ist eine formschlüssige Nut/Feder-Verbindung möglich, wie es die Figuren 14A bis 14 E für den Formschluss der eine Hülse 10 bildenden Hartgummilage 12 zeigen.

Um die unterschiedlichen Möglichkeiten, beispielsweise einen Hülsenträger 15 formschlüssig mit dem Kern 11zu verbinden, kann ein Formschluss durch eine Feder/Nutverbindung zwischen dem Hülsenträger 15 und dem Kern11, wie es in Figur 14A gezeigt wird, gewährleistet werden.

In Figur 14B wird der Formschluss zwischen dem Hülsenträger 15 und dem Kern 11 durch ein ovales Profil des Kerns 11 gegenüber dem Hülsenträger 15 erreicht. Dazu muss der Kern 11 nicht durchgängig oval ausgebildet sein. Es reicht aus, wenn nur ein schmaler Bereich beispielsweise ein Stirnbereich des Kerns 11 und des Hülsenträgers 15 oval ausgebildet ist.

In Figur 14C wird der Formschluss durch ein dreieckiges, in Figur 14D durch ein viereckiges und in Figur 14E durch ein sechseckiges Profil des Kerns 11 erreicht, wobei im Prinzip jeder polygonale Querschnitt des Kerns 11 einen Formschluss mit dem Hülsenträger 15 ermöglicht.

In Figur 14F wird der Formschluss sowohl zwischen Hülse 10 und Hülsenträger 15 als auch zwischen Hülsenträger 15 und Kern 11 durch Federn erreicht, die als Kugeln oder als Walzen ausgebildet sind. Diese können mit entsprechend angepassten Längsnuten in Eingriff stehen, um den Formschluss zu erreichen.

Neben den in den Figuren 14A bis 14F beispielhaft gezeigten Strukturen zur formschlüssigen Verbindung sind natürlich auch noch andere äquivalente Strukturen denkbar, z.B. auch Vielkeilverzahnungen.

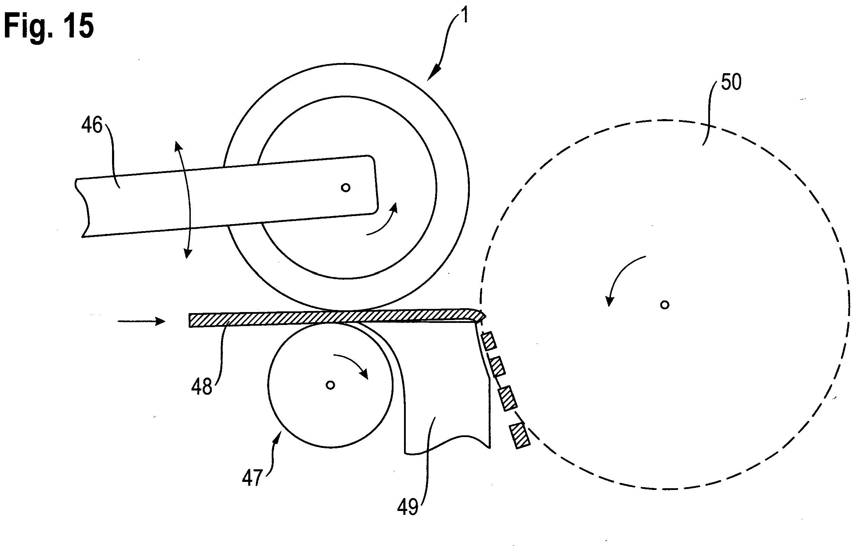

In Figur 15 ist schematisch die Verwendung einer erfindungsgemäßen Führungswalze in einer Stranggranuliervorrichtung gezeigt. Die erfindungsgemäß gestaltete Führungswalze 1 ist dabei an einem Träger 46 im oder am Gehäuse (nicht explizit gezeigt) der Stranggranuliervorrichtung schwenkbar gelagert, wie dies durch den entsprechenden Doppelpfeil in der Figur angegeben ist. Zur leichteren Erreichbarkeit ist die Führungswalze 1 durch die Verschwenkbarkeit auch von der fest im Gehäuse drehbar montierten durch einem Motor (nicht gezeigt) angetriebenen Antriebswalze 47 komplett in der Figur nach oben abhebbar. Bevorzugt wird die Führungswalze 1 durch ihr Eigengewicht und das Gewicht des Trägers 46 oder durch geeignete mechanische Andrückvorrichtungen, z.B. durch entsprechend positionierte pneumatischen Andrückzylinder, in Richtung gegen die Antriebswalze 47 gedrückt. Die erfindungsgemäße Führungswalze 1 und die Antriebswalze 47 bilden so zusammen ein Einzugswalzenpaar der Stranggranuliervorrichtung, mittels welchem ein oder mehrere dazwischen unter Einfluss der Klemmkraft zwischen Führungswalze 1 und Antriebswalze 47 laufende(r) Strang/Stränge 48 (siehe Pfeil in der Figur) in an sich bekannter Weise einer Kombination aus einem feststehenden Schneidmesser 49 und einem rotierenden Schneidmesser 50 zugeführt wird/werden um dort, wie in der Figur gezeigt, in Granulatkörner zerteilt zu werden. Die Drehrichtungen der Führungswalze 1, der Antriebswalze 47 und des rotierenden Schneidmessers 50 sind in der Figur durch Pfeile dargestellt.

### Bezugszeichenliste

- 1: Führungswalze
- 2: Führungswalze
- 3: Führungswalze
- 4: Führungswalze
- 5: Führungswalze
- 6: Führungswalze
- 7: Führungswalze
- 8: Führungswalze
- 9: Führungswalze
- 10: Hülse
- 11: Kern
- 12: Hartgummilage
- 13: Stirnbereich
- 14: Stirnbereich
- 15: Hülsenträger
- 16: Außengewinde
- 17: Ringmutter
- 18: Konusfläche
- 19: Gegenkonusfläche
- 20: Konusfläche
- 21: Gegenkonusfläche
- 22: Feder
- 23: Längsnut
- 24: Innenkonus
- 25: Außenkonus
- 26: Achszapfen
- 27: Achszapfen
- 28: Hohlwelle
- 29: Starrachse
- 30: zentrale Achsbohrung
- 31: radiale Bohrung
- 32: Druckluftquelle
- 33: radiale Öffnungen
- 34: Stirnscheibe
- 35: Stirnscheibe
- 36: Druckluftanschluss
- 37: Druckluftventil
- 38: Drucksensor
- 39: Hohlzylinder
- 40: Zwischenlage
- 41: Lager
- 42: Lager
- 43: Endbereich
- 44: Verstärkungszylinder
- 45: Achse
- 46: Träger
- 47: Antriebswalze
- 48: Strang/Stränge
- 49: feststehendes Schneidmesser
- 50: rotierendes Schneidmesser

- α: Neigungswinkel
- A: Bereich
- B: Bereich
- L: Walzenbreite

## Patentansprüche

1. Führungswalze eines Einzugswalzenpaares einer Granuliervorrichtung von Kunststoffsträngen, wobei die Führungswalze (1 bis 9) einen Kern (11) und mindestens eine äußere Hartgummilage (12) aufweist, wobei die mindestens eine äußere Hartgummilage (12) eine Hülse (10) bildet, die auf den Kern (11) der Führungswalze (1) aufschiebbar und von dem Kern (11) abziehbar ist **dadurch gekennzeichnet, dass**
mindestens einer der Stirnbereiche (14) des Kerns (11) ein Außengewinde (16) aufweist, auf das eine Ringmutter (17) schraubbar ist, wobei die Ringmutter (17) eine erste Konusfläche (18) aufweist, welche mit einer ersten Gegenkonusfläche (19) der Hülse (10) in Eingriff steht, wobei entweder ein gegenüberliegender Stirnbereich (13) des Kerns (11) eine zweite Konusfläche (20) aufweist, die mit einer gegenüberliegenden zweiten Gegenkonusfläche (21) der eine Hülse (10) bildenden äußeren Hartgummilage (12) in Eingriff steht, und wobei die eine Hülse (10) mit ihren zwei Gegenkonusflächen (19, 21) durch die zwei Konusflächen (18, 20) des Kerns (11) und der Ringmutter (17) zentriert ist, oder
die Hülse (10) aus einer äusseren Hartgummilage (12) und einem innen angeordneten Verstärkungszylinder (44), der in Achsrichtung einen inneren Konus (24) aufweist, der mit einem Außenkonus (25) des Kerns (11) kraftschlüssig verbindbar ist, besteht, wobei die Gegenkonusfläche (19) des Verstärkungszylinders (44) mit der Konusfläche (18) der Ringmutter (17), die auf dem Gewinde (16) im Stirnbereich (14) eingesetzt ist, zusammenwirkt und dadurch die Hülse (10) axial fixiert.

2. Führungswalze nach Anspruch 1, wobei aus dem zylindrischen Kern (11) eine Feder (22) in Achsrichtung herausragt, die mit einer inneren Längsnut (23) der äußeren Hartgummilage (12) beim Aufschieben und beim Abziehen formschlüssig in Eingriff steht.

3. Führungswalze nach Anspruch 1, wobei aus dem Außenkonus (25) des Kerns (11) eine Feder (22) in Achsrichtung herausragt, die mit einer inneren Längsnut (23) des Innenkonus (24) der äußeren Hartgummilage (12) beim Aufschieben und beim Abziehen formschlüssig in Eingriff steht.

4. Führungswalze nach einem der vorhergehenden Ansprüche, wobei die Hartgummilage auf einen Verstärkungszylinder (44) aufvulkanisiert oder aufgeklebt oder aufgespannt ist und die Hülse (10) mit dem Verstärkungszylinder (44) auf dem Kern (11) angeordnet ist.

5. Führungswalze nach Anspruch 4, wobei der Verstärkungszylinder (44) die Gegenkonen (19, 20) aufweist, die zwischen dem stirnseitigen Konus (20) des Kerns (11) und dem Konus (18) der Ringmutter (17) geklemmt und zentriert angeordnet sind.

6. Führungswalze nach Anspruch 4 oder Anspruch 5, wobei der Verstärkungszylinder (44) eine innere Längsnut (23) aufweist, die mit der aus dem Außenmantel des Kerns (11) herausragenden Feder (22) in Eingriff steht.

7. Führungswalze nach einem der Ansprüche 4 bis 6, wobei der auf dem Kern (11) angeordnete Verstärkungszylinder (44) einen Duroplast, einen faserverstärkten Kunststoff oder eine Metalllegierung aufweist.

8. Führungswalze nach einem der Ansprüche 4 bis 6, wobei die eine Hülse (10) bildende äußere Hartgummilage (12) auf einen Hülsenträger (15) mit oder ohne Verstärkungszylinder (44) angeordnet ist.

9. Führungswalze nach Anspruch 8, wobei mindestens ein Endbereich (43) des Hülsenträgers (15) ein Außengewinde (16) aufweist, über das eine Ringmutter (17) geschraubt werden kann, die eine erste Konusfläche (18) aufweist, welche mit einer ersten Gegenkonusfläche (19) der eine Hülse (10) bildenden äußeren Hartgummilage (12) in Eingriff steht, wobei ein gegenüberliegender Stirnbereich (13) des Hülsenträgers (15) eine zweite Konusfläche (20) aufweist, die mit einer gegenüberliegenden zweiten Gegenkonusfläche (21) der eine Hülse (10) bildenden äußeren Hartgummilage (12) in Eingriff steht, und wobei die eine Hülse (10) mit ihren zwei Gegenkonusflächen (19, 21) durch die zwei Konusflächen (18, 20) des Hülsenträgers (15) und der Ringmutter (17) zentriert ist.

10. Führungswalze nach Anspruch 8 oder Anspruch 9, wobei die Hülse (10) aus Hülsenträger (15) mit mindestens äußerer Hartgummilage (12) eine innere Längsnut aufweist, die mit einer aus dem Hülsenträger (15) herausragenden Feder (22) in Achsrichtung in Eingriff steht.

11. Führungswalze nach einem der Ansprüche 8 bis 10, wobei der Hülsenträger (15) integraler Bestandteil des Kerns (11) ist.

12. Führungswalze nach einem der vorhergehenden Ansprüche, wobei der Kern (11) der Führungswalze (4, 9 und 9') stirnseitig angeordnete Achszapfen (26, 27) aufweist, die in einem Gehäuse der Granuliervorrichtung schwenkbar gelagert sind.

13. Führungswalze nach einem der Ansprüche 1 bis 10, wobei der Kern (11) der Führungswalze (5) eine Hohlwelle (28) aufweist, die drehbar auf einer Starrachse (29) gelagert ist.

14. Führungswalze nach einem der Ansprüche 1 bis 11, wobei der Kern (11) der Führungswalze (7, 8) radiale Bohrungen (31) aufweist, die mit einer zentralen Achsbohrung (30) kommunizieren, wobei die zentrale Achsbohrung (30) des Kerns (11) einen Druckluftanschluss (36) aufweist.

15. Führungswalze nach einem der Ansprüche 1 bis 11, wobei der Kern (11) der Führungswalze (9, 9') eine Hohlwelle (28) ist, die radiale Öffnungen (33) aufweist und an den Stirnbereichen druckluftdichte Stirnscheiben (34, 35) mit Achszapfen (26, 27) aufweist, wobei mindestens ein Achszapfen (26) eine zentrale Achsbohrung (30) ausweist, wobei die zentrale Achsbohrung (30) in dem mindestens einen Achszapfen (26) des Kerns (11) einen Druckluftanschluss (36) aufweist, der an eine Druckluftquelle (32) beim Aufschieben und beim Abziehen der eine Hülse (10) bildenden äußeren Hartgummilage (12) anschließbar ist.

16. Führungswalze nach einem der Ansprüche 13 bis 15, wobei zwischen dem Kern (11) mit radialen Bohrungen (31) oder radialen Öffnungen (33) und der umgebenden Hülse (10) mit mindestens der Hartgummilage (12) eine Zwischenlage (40) aus kompressiblem Material angeordnet ist.

## Claims

1. Guide roller of a feed roller pair of a granulating device for plastic strands, with the guide roller (1 to 9) having a core (11) and at least one outer hard rubber layer (12), with the outer hard rubber layer (12), of which there is at least one, forming a sleeve (10) which can be slid onto the core (11) of the guide roller (1) and also removed from the core (11) **characterised in that**
at least one of the front portions (14) of the core (11) has an external thread (16) onto which a ring nut (17) can be screwed, with the ring nut (17) having a first conical surface (18) which engages with a first counter-conical surface (19) of the sleeve (10), with either an opposite front portion (13) of the core (11) having a second conical surface (20) which engages with an opposite second counter-conical surface (21) of the outer hard rubber layer (12) forming a sleeve (10), and with the one sleeve (10) with its two counter-conical surfaces (19, 21) being centred by the two conical surfaces (18, 20) of the core (11) and the ring nut (17), or
the sleeve (10) is comprised of an outer hard rubber layer (12) and an inner reinforcing cylinder (44), which, in the axial direction, has an inner cone (24) which can engage in a friction-locking connection with an outer cone (25) of the core (11), with the counter-conical surface (19) of the reinforcing cylinder (44) interacting with the conical surface (18) of the ring nut (17), which is positioned on the thread (16) in the front portion (14), thereby fixing the sleeve (10) axially.

2. Guide roller of claim 1, with a spring (22) projecting from the cylindrical core (11) in the axial direction, which engages in a form-locking connection with an inner longitudinal groove (23) of the outer hard rubber layer (12) during sliding on and removal.

3. Guide roller of claim 1, with a spring (22) projecting from the outer cone (25) of the core (11) in the axial direction, which engages in a form-locking connection with an inner longitudinal groove (23) of the inner cone (24) of the outer hard rubber layer (12) during sliding on and removal.

4. Guide roller of one of the preceding claims, with the hard rubber layer being vulcanised or bonded or clamped onto a reinforcing cylinder (44) and the sleeve (10) being disposed with the reinforcing cylinder (44) on the core (11).

5. Guide roller of claim 4, with the reinforcing cylinder (44) having the counter-cones (19, 20) which are clamped and centred between the front-ended cone (20) of the core (11) and the cone (18) of the ring nut (17).

6. Guide roller of claim 4 or claim 5, with the reinforcing cylinder (44) having an inner longitudinal groove (23) which engages with the spring (22) projecting from the outer casing of the core (11).

7. Guide roller of one of claims 4 to 6, with the reinforcing cylinder (44) disposed on the core (11) having a thermoset, a fibre-reinforced plastic or a metal alloy.

8. Guide roller of one of claims 4 to 6, with the outer hard rubber layer (12) forming a sleeve (10) being disposed on a sleeve support (15) with or without reinforcing cylinder (44).

9. Guide roller of claim 8, with at least one end portion (43) of the sleeve support (15) having an external thread (16) onto which the one ring nut (17) can be screwed, which has a first conical surface (18) which engages with a first counter-conical surface (19) of the outer hard rubber layer (12) forming a sleeve (10), with an opposite front portion (13) of the sleeve support (15) having a second conical surface (20) which engages with an opposite second conical surface (21) of the outer hard rubber layer (12) forming a sleeve (10) and with the one sleeve (10) with its two counter-conical surfaces (19, 21) being centred by the two conical surfaces (18, 20) of the sleeve support (15) and the ring nut (17).

10. Guide roller of claim 8 or claim 9, with the sleeve (10) from sleeve support (15) with at least outer hard rubber layer (12) having an inner longitudinal groove which engages with a spring (22) projecting from the sleeve support (15) in the axial direction.

11. Guide roller of one of claims 8 to 10, with the sleeve support (15) being an integral part of the core (11).

12. Guide roller of one of the preceding claims, with the core (11) of the guide roller (4, 9 and 9') having front-positioned axle pins (26, 27) which are swivel-mounted in a housing of the granulating device.

13. Guide roller of one of claims 1 to 10, with the core (11) of the guide roller (5) having a hollow shaft (28) which is rotatably mounted on a rigid axle (29).

14. Guide roller of one of the claims 1 to 11, with the core (11) of the guide roller (7, 8) having radial holes (31) which communicate with a central axle hole (30), with the central axle hole (30) of the core (11) having a compressed air connection (36).

15. Guide roller of one of claims 1 to 11, with the core (11) of the guide roller (9, 9') being a hollow shaft (28) which has radial openings (33) and, in the front portions, has compressed air-tight front discs (34, 35) with axle pins (26, 27), with at least one axle pin (26) having a central axial hole (30), with the central axial hole (30) in the at least one axle pin (26) of the core (11) having a compressed air connection (36) which can be connected to a source of compressed air (32) when sliding on and removing the outer hard rubber layer (12) forming a sleeve (10).

16. Guide roller of one of claims 13 to 15, with an intermediate layer (40) made from compressible material being disposed between the core (11) with radial holes (31) or radial openings (33) and the surrounding sleeve (10) with at least the hard rubber layer (12).

## Revendications

1. Cylindre de guidage (1 à 9) d'une paire de rouleaux d'alimentation d'un dispositif de granulation de cordons en matière plastique, présentant un noyau (11) et au moins une enveloppe extérieure en caoutchouc dur (12), ladite enveloppe extérieure en caoutchouc dur (12) formant un manchon (10) qui peut être enfilé sur le noyau (11) du cylindre de guidage (1) et en être retiré,
**caractérisé en ce que**
l'une au moins des parties frontales (14) du noyau (11) présente un filetage mâle (16) sur lequel un écrou annulaire (17) peut être vissé, ledit écrou annulaire (17) présentant une première surface conique (18) en prise avec une première surface contre-conique (19) du manchon (10), une partie frontale opposée (13) du noyau (11) présentant une deuxième surface conique (20) en prise avec une deuxième surface contre-conique (21) de l'enveloppe extérieure en caoutchouc dur (12) formant un manchon (10) et les deux surfaces coniques (18, 20) du noyau (11) et de l'écrou annulaire (17) permettant de centrer le manchon (10) et ses deux surfaces contre-coniques (19, 21) ou
le manchon (10) est formé d'une enveloppe extérieure en caoutchouc dur (12) et d'un cylindre de renforcement (44) intérieur présentant un cône interne (24) en direction axiale pouvant être assemblé par liaison de force avec un cône externe (25) du noyau (11), la surface contre-conique (19) du cylindre de renforcement (44) concourant avec la surface conique (18) de l'écrou annulaire (17) sur le filetage (16) dans la partie frontale (14) afin de fixer axialement le manchon (10).

2. Cylindre de guidage conforme à la revendication 1, un emboîtement (22) dépassant en direction axiale du noyau (11) cylindrique et ledit emboîtement se trouvant en prise par complémentarité de forme avec une rainure longitudinale (23) intérieure de l'enveloppe extérieure en caoutchouc dur (12) lors de la pose et du retrait du manchon (10).

3. Cylindre de guidage conforme à la revendication 1, un emboîtement (22) dépassant en direction axiale du cône externe (25) du noyau (11) et ledit emboîtement se trouvant en prise par complémentarité de forme avec une rainure longitudinale intérieure (23) du cône interne (24) de l'enveloppe extérieure en caoutchouc dur (12) lors de la pose et du retrait du manchon (10).

4. Cylindre de guidage conforme à l'une des revendications précédentes, l'enveloppe en caoutchouc dur étant vulcanisée, collée ou tendue sur un cylindre de renforcement (44) avec lequel le manchon (10) est placé sur le noyau (11).

5. Cylindre de guidage conforme à la revendication 4, le cylindre de renforcement (44) présentant les contre-cônes (19, 20) qui sont calés et centrés entre le cône côté frontal (20) du noyau (11) et le cône (18) de l'écrou annulaire (17).

6. Cylindre de guidage conforme à la revendication 4 ou à la revendication 5, le cylindre de renforcement (44) présentant une rainure longitudinale intérieure (23) en prise avec l'emboîtement (22) dépassant de l'enveloppe extérieure du noyau (11).

7. Cylindre de guidage conforme à l'une des revendications 4 à 6, le cylindre de renforcement (44) placé sur le noyau (11) présentant une résine thermodurcissable, une matière plastique renforcée de fibres ou un alliage métallique.

8. Cylindre de guidage conforme à l'une des revendications 4 à 6, l'enveloppe extérieure en caoutchouc dur (12) formant un manchon (10) étant placée sur un support de manchon (15) avec ou sans cylindre de renforcement (44).

9. Cylindre de guidage conforme à la revendication 8, l'une au moins des extrémités (43) du support de manchon (15) présentant un filetage mâle (16) sur lequel un écrou annulaire (17) peut être vissé, ledit écrou annulaire (17) présentant une première surface conique (18) en prise avec une première surface contre-conique (19) de l'enveloppe extérieure en caoutchouc dur (12) formant un manchon (10), une partie frontale opposée (13) du support de manchon (15) présentant une deuxième surface conique (20) en prise avec une deuxième surface contre-conique opposée (21) de l'enveloppe extérieure en caoutchouc dur (12) formant un manchon (10) et les deux surfaces coniques (18, 20) du support de manchon (15) et de l'écrou annulaire (17) permettant de centrer le manchon (10) et ses deux surfaces contre-coniques (19, 21).

10. Cylindre de guidage conforme à la revendication 8 ou à la revendication 9, le manchon (10) du support de manchon (15) présentant au moins une enveloppe extérieure en caoutchouc dur (12) qui elle-même présente une rainure longitudinale intérieure en prise avec un emboîtement (22) qui dépasse du support de manchon (15) en direction axiale.

11. Cylindre de guidage conforme à l'une des revendications 8 à 10, le support de manchon (15) faisant partie intégrante du noyau (11).

12. Cylindre de guidage (4, 9 et 9') conforme à l'une des revendications précédentes dont le noyau (11) présente des tourillons (26, 27) du côté frontal, logés de manière pivotante dans un boîtier correspondant du dispositif de granulation.

13. Cylindre de guidage (5) conforme à l'une des revendications 1 à 10 dont le noyau (11) présente un arbre creux (28) placé de manière rotative sur un axe fixe (29).

14. Cylindre de guidage (7, 8) conforme à l'une des revendications 1 à 11 dont le noyau (11) présente des perçages radiaux (31) qui communiquent avec un perçage axial central (30), ledit perçage axial central (30) du noyau (11) présentant un raccord d'air comprimé (36).

15. Cylindre de guidage (9, 9') conforme à l'une des revendications 1 à 11 dont le noyau (11) est un arbre creux (28) qui présente des orifices radiaux (33) et des plaques frontales (34, 35) étanches à l'air comprimé dans ses parties frontales, lesdites plaques frontales (34, 35) présentant des tourillons (26, 27) et l'un au moins des tourillons (26) présentant un perçage axial central (30), ledit perçage axial central (30) présentant un raccord d'air comprimé (36) placé dans au moins l'un des tourillons (26) du noyau (11) et ledit raccord d'air comprimé (36) pouvant être raccordé à une alimentation en air comprimé (32) lors de la pose et du retrait de l'enveloppe extérieure en caoutchouc dur (12) formant un manchon (10).

16. Cylindre de guidage conforme à l'une des revendications 13 à 15, une couche intermédiaire (40) de matériau compressible étant placée entre le noyau (11) présentant des perçages radiaux (31) ou des orifices radiaux (33) et le manchon (10) dont il est entouré présentant au moins une enveloppe en caoutchouc dur (12).
